(19) Europäisches Patentamt
European Patent Office
Office européen des brevets

(11) EP 2 681 506 B1

(12) **EUROPEAN PATENT SPECIFICATION**

(45) Date of publication and mention
of the grant of the patent:
**26.11.2014 Bulletin 2014/48**

(21) Application number: **11813913.8**

(22) Date of filing: **07.12.2011**

(51) Int Cl.:
**G01B 3/30** *(2006.01)*          **G01B 21/04** *(2006.01)*

(86) International application number:
**PCT/JP2011/006845**

(87) International publication number:
**WO 2012/117474 (07.09.2012 Gazette 2012/36)**

(54) **A Cubic Standard**

STANDARDKUBUS

ETALON DE MESURE CUBIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.03.2011 JP 2011044082**

(43) Date of publication of application:
**08.01.2014 Bulletin 2014/02**

(73) Proprietor: **Sintokogio, Ltd.
Nagoya-shi, Aichi 450-0002 (JP)**

(72) Inventors:
• **MORIMITSU, Hideki
Toyokawa-shi
Aichi 442-8505 (JP)**

• **ASANO, Norihiro
Toyokawa-shi
Aichi 442-8505 (JP)**

(74) Representative: **Thum, Bernhard
Wuesthoff & Wuesthoff
Patent- und Rechtsanwälte
Schweigerstraße 2
81541 München (DE)**

(56) References cited:
**EP-A1- 1 041 359      DE-A1- 10 159 442
DE-A1- 19 644 712**

## Description

## Technical Field

The present invention relates to a cubic standard for precisely measuring or adjusting the squareness, parallelism, straightness, or flatness for a machine tool or a precision machine that has been assembled or installed.

## Background Art

Conventionally, a cubic standard has been used for measuring the degree of accuracy of the three-dimensional geometry (X-, Y-, and Z-axes) of various kinds of machine tools and measuring instruments after assembly or installation (for example, see DE 101 59 442 A1 or Japanese Patent Laid-open Publication No. S62-95848).

## Disclosure of Invention

Recently, as machines have become larger with a high degree of accuracy, needs for a cubic standard that is high-precision and easy to be handled have increased. However, since a conventional cubic standard is made of a stone material, such as a gabbro, or cast iron, it is very heavy. For example, a cubic standard that is 1 m on a side weighs 1,000 kg or more. Thus the cubic standard is difficult to be handled. Further, a table of a machine tool may be deformed by just putting the cubic standard on it, to thereby make a measurement with a high degree of accuracy difficult. This has been a problem.

Therefore, the object of the present invention is to provide a cubic standard that is light, but with a high rigidity.

To achieve the object, by the first aspect of the present invention and according to claim 1, a cubic standard is constructed by assembling ceramic square pipes along all sides. In adjoining square pipes an end face in a longitudinal direction of one square pipe abuts a side in a longitudinal direction of another square pipe, to form a corner. They are fixed by a fixing member so that one square pipe is perpendicular to the other square pipe.

By the first aspect of the present invention, since a cubic standard is constructed by assembling ceramic square pipes that have a high elastic modulus, a cubic standard with a high rigidity that is required for a standard can be obtained by using hollow square pipes. Thus the weight of a cubic standard is significantly reduced compared to a conventional solid cubic standard.

By using a fixing member the adjoining square pipes are securely fixed. Further, the rigidity of the cubic standard increases. Since the adjoining square pipes are disposed perpendicularly to each other, assembly of the square pipes is facilitated, and done with a high degree of accuracy. Since assembly of the square pipes is facilitated, to thus reduce the number of steps for final finishing, the costs for manufacturing it are reduced.

By the second aspect of the present invention, the end face of the one of the adjoining square pipes, which abuts the side of the other of the adjoining pipes, adheres to the side of the other square pipe in the first aspect of the present invention.

By the second aspect of the present invention, since the end face of one of the adjoining square pipes, which abuts the side of the other square pipe, adheres to the side of the other pipe, the rigidity of the cubic standard further increases.

By the third aspect of the present invention, a plug is provided to the end in a longitudinal direction of the one square pipe that abuts the side of the other square pipe in the second aspect of the present invention. The plug is inserted into, and adheres to, the one square pipe. The plug is shaped as a block to form an end face. The end face abuts the side of the other square pipe, to adhere to it.

By the third aspect of the present invention, since the end face is made of a block-like plug, the area of the face of the one square pipe that abuts the other square pipe increases, to increase the structural strength and the rigidity of the cubic standard.

By the fourth aspect of the present invention, the plug comprises a bolted section to be bolted to the side where the plug abuts, in the third aspect of the present invention. The plug is configured to be bolted by a bolt through a hole formed in the side where the plug abuts.

By the fourth aspect of the present invention, since the plug comprises a bolted section, the one square pipe is more securely fixed to the other square pipe, to increase the structural strength and the rigidity of the cubic standard.

By the fifth aspect of the present invention, the square pipes are made of an alumina ceramic material in any of the first to fourth aspects of the present invention.

By the fifth aspect of the present invention, since an alumina ceramic material is light and has a high elastic modulus, it is suitable to be used for a material for the square pipes. Further, it is easy to be formed or machined, and so the costs for manufacturing the cubic standard are reduced. Since it has a high degree of hardness, the cubic standard is durable against possible abrasion that could be caused by repeated contacts with a probe for measurements.

By the sixth aspect of the present invention, the hollow of the square pipes has a circular cross section in any of the first to the fourth aspects of the present invention.

By the sixth aspect of the present invention, since the hollow of the square pipes has a circular cross section, the second moment of area is larger than that of a square pipe with a hollow with a rectangular cross section. Thus the rigidity of the cubic standard increases.

By the seventh aspect of the present invention,

two reinforcing square pipes made of ceramics are disposed at the center between one pair of square pipes that are positioned on vertical adjacent edges of the cube and at the center between another pair in any of the first to the fourth aspects of the present invention. Their longitudinal axes are vertical. They are fixed by fixing members to the square pipes that are configured to be the horizontal edges of the cube.

By disposing two reinforcing square pipes made of ceramics at the center between one pair of square pipes that are positioned on vertical adjacent edges of the cube and at the center between another pair, wherein their longitudinal axes are vertical, and by fixing them by fixing members to the square pipes that are configured to be the horizontal edges of the cube, as in the seventh aspect of the present invention, the rigidity of the cubic standard increases. Especially, this aspect is suitably used in a large cubic standard in which the edges are long.

The basic Japanese patent application, No. 2011-044082, filed March 1, 2011, is hereby incorporated by reference in the present application in its entirety.

The present invention will become more fully understood from the detailed description given below. However, the detailed description and the specific embodiments are illustrations of desired embodiments of the present invention, and are described only for an explanation. Various possible changes and modifications will be apparent to those of ordinary skill in the art on the basis of the detailed description.

The applicant has no intention to dedicate to the public any disclosed embodiment. Among the disclosed changes and modifications, those which may not literally fall within the scope of the present claims constitute, therefore, a part of the present invention in the sense of the doctrine of equivalents.

The use of the articles "a," "an," and "the" and similar referents in the specification and claims are to be construed to cover both the singular and the plural, unless otherwise indicated herein or clearly contradicted by the context. The use of any and all examples, or exemplary language (e.g., "such as") provided herein, is intended merely to better illuminate the invention, and so does not limit the scope of the invention, unless otherwise claimed.

**Brief Description of Drawings**

Fig. 1 is the perspective view of the cubic standard to illustrate its structure.

Fig. 2 illustrates the structure of the first square pipe that is a part of the cubic standard. Fig. 2(A) is the side view. Fig. 2(B) is a sectional view taken along line A-A in Fig. 2(A). Fig. 2(C) is a view taken in the direction of arrows B-B in Fig. 2(A), and Fig. 2(D) is a view taken in the direction of arrows C-C.

Fig. 3 illustrates the structure of the second square pipe that is a part of the cubic standard. Fig. 3(A) is the side view. Fig. 3(B) is a sectional view taken along line D-D in Fig. 3(A). Fig. 3(C) is a view taken in the direction of arrows E-E in Fig. 3(A), and Fig. 3(D) is a view taken in the direction of arrows F-F.

Fig. 4 illustrates the structure of the fixing member that is a part of the cubic standard. Fig. 4(A) is a side view. Fig. 4(B) is a plan view taken from the upper side in Fig. 4(A).

Fig. 5 is the partially-perspective sectional view of the part K in Fig. 1 to illustrate the assembled structure of the cubic standard.

Fig. 6 is an explanatory drawing for the effects of the eccentricity of the hollow in the square pipe on the rigidity of the cubic standard.

Fig. 7 is the perspective view of a variation of the cubic standard.

**Best Mode for Carrying out the Invention**

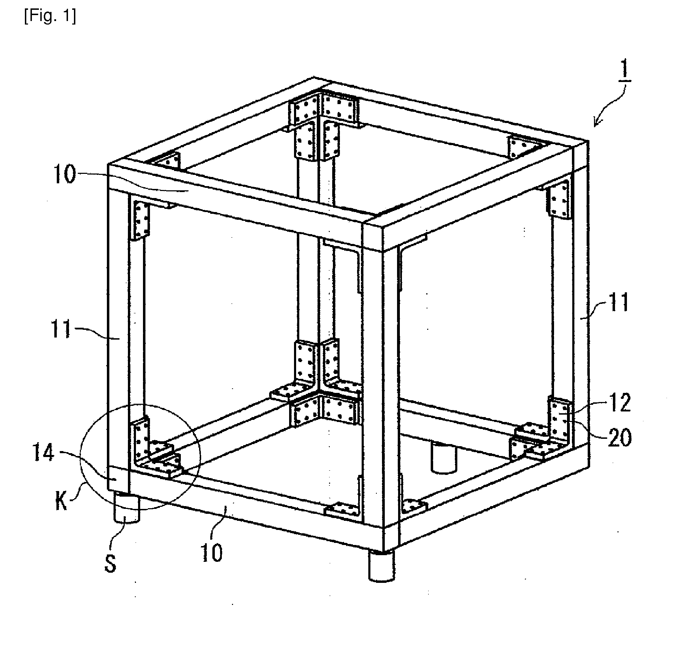

The cubic standard of the present invention is now described with reference to the drawings. As shown in Fig. 1, a cubic standard 1 is constructed by assembling first square pipes 10 and second square pipes 20, all of which are made of ceramics. Those pipes form all of the edges of a cube that is shaped as the cubic standard 1. Adjoining square pipes are placed so that an end face in a longitudinal direction of one square pipe abuts a side in a longitudinal direction of the other square pipe, to form a corner. The faces that abut each other adhere to each other. Further, the adjoining first square pipes 10 or adjoining first square pipe 10 and second square pipe 11 are perpendicularly positioned by a fixing member 12 and are fixed by stainless steel bolts 20. An opening of one end of the first square pipe 10 is covered by a cap 14.

Here, the word "adhere" means not only adhering by means of an adhesive agent, but also adhering by means of a tape with an adhesive on both sides, adhering by applying a sheet-like insert material, a brazing filler metal, paste such as glass frit to adhering surfaces and by heating it, diffusion-adhering, and so on. In this embodiment, the adhering is achieved by using an epoxy adhesive. For strong adhesion, diffusion-adhering may be used.

If a high degree of accuracy is required in a measurement, the cubic standard 1 is used by being supported at three points, i.e., two points at the corners at the near side and one point at the center of the edge that opposes the corners, as in this embodiment. The cubic standard 1 may be used by being directly mounted on the table of a machine tool.

The horizontal planes of the cubic standard 1 are constructed by the first square pipes 10, which are horizontally placed. The vertical planes of the cubic standard 1 are constructed by the first square pipes 10 that are placed horizontally and the second square pipes 11 that are placed vertically.

All edges of the cubic standard 1 are finished by a grinding process after assembling so that the squareness, parallelism, straightness, and flatness are within the specified accuracy, e.g., 3 micrometer or less for the cubic standard 1 having edges 550 mm long, and 8 micrometer or less for the cubic standard 1 having edges 1,000 mm long.

Because the first square pipe 10 and the second square pipe 11 are made of ceramics, their elastic modulus is high. Even when they have hollows, the cubic standard 1 has the required rigidity. Thus the weight of the cubic standard 1 can be significantly reduced compared with that of a conventional solid cubic standard.

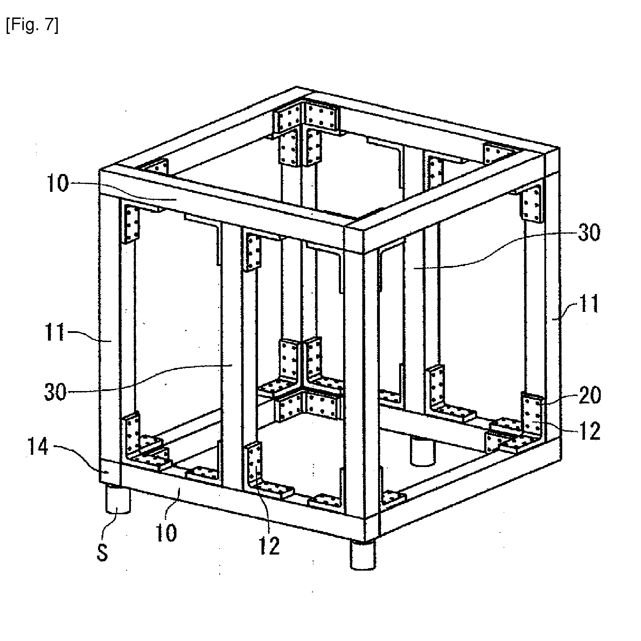

For example, when the cubic standard 1 with an edge 550 mm long is made of the first and second square pipes 10, 11 that have a cross section 70 mm x 70 mm and a hollow with an inner diameter of 47 mm, it weighs about 100 kg. When the cubic standard 1 with an edge 1,000 mm long that has a construction as shown in Fig. 7 is made of the first and second square pipes that have a cross section 80 mm x 80 mm and a hollow with an inner diameter of 56 mm, it weighs about 270 kg. Reducing the weight to one-third or to one-fourth of a conventional cubic standard made of a stone material can be achieved.

Alumina-based ceramics, such as alumina, are preferably used for the ceramics that are used for the first and second square pipes 10, 11. Alumina is used for the square pipes in the embodiment. Alumina is light and has an elastic modulus that is four times higher or more than stone material. It is also durable. It is easily molded or machined to reduce the manufacturing costs. Further, since it has a high degree of hardness, it has high resistance to abrasion that could be caused by a probe that repeatedly contacts it during measurement.

A precise standard made of a stone material is affected by a change in temperature or humidity, to lower the accuracy. Thus for a precise measurement the temperature and humidity must be tightly controlled. However, since the cubic standard 1 is little affected by a change in temperature or humidity, a stable and accurate measurement can be carried out.

By using fixing members 12, the first square pipes 10 and the second square pipes 11 are securely fixed and the rigidity of the cubic standard 1 increases. Further, since the adjoining pipes are positioned to be perpendicular to each other, assembling the square pipes is facilitated, and done with a high degree of accuracy. Thus, since the assembling is facilitated and the number of steps for final finishing is reduced, the costs for manufacturing the cubic standard are reduced.

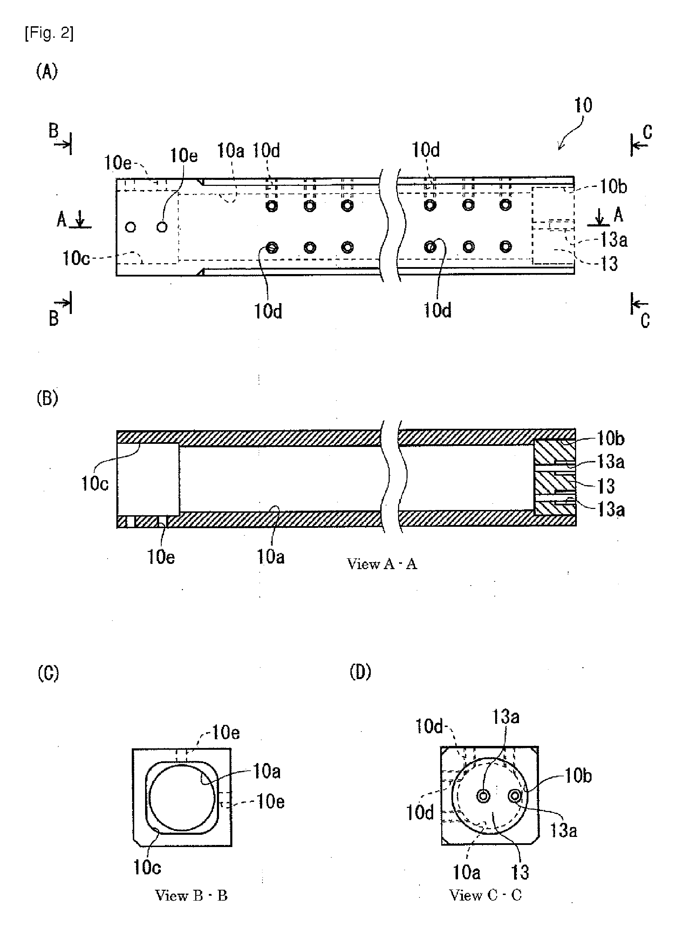

As shown in Fig. 2, the cross section of the hollow 10a of the first square pipe 10 is circular or square. In this embodiment, it is circular. If so, since the second moment of area of the cross section with a circular hollow is greater than that with a square hollow, the rigidity of the cubic standard becomes greater than that of a cubic standard that is constructed with square pipes with a square hollow when the sectional areas of the square pipes with square and circular hollows are equal.

At the end of the first square pipe 10 that abuts the side of the first square pipe 10, a portion 10b for a plug being inserted is formed. A plug 13 is inserted into the portion 10b for a plug and fixed by adhesion. In the present embodiment, the cross section of the portion 10b for a plug being inserted is circular, to be concentric with the circular section of the hollow 10a. It is larger in its diameter than the hollow 10a, to thereby fit the plug 13.

The plug 13 is a block-like member that has a circular cross section and is made of the same ceramic material as the first square pipe 10. It is fixed to the portion 10b for a plug being inserted to form the end face of the first square pipe 10. It has a bolted section 13a so that it is fixed to the side of the first square pipe 10 that it abuts.

At the other end of the first square pipe 10 a portion 10c for fixation that has a square cross section is formed. The portion 10c is fixed to the adjoining first square pipe 10 or second square pipe 11 through the plug 13 by means of a stainless-steel bolt 21. A hole 10e for fixing the plug is formed at the portion 10c for fixation. The hole 10e is positioned at a location that corresponds to the location of the bolted section 13a in the plug 13 when the first square pipes 10 and the second square pipes 11 are assembled. The stainless-steel bolt 21 is inserted into the bolted section 13a through the hole 10e.

A portion 10d for fixing a bolt for the fixing member is formed at the side of the first square pipe 10. A bolt 20 is bolted through the portion 10d to fix the first square pipe 10 to the first square pipe 10 or the second square pipe 11 by the fixing member 12.

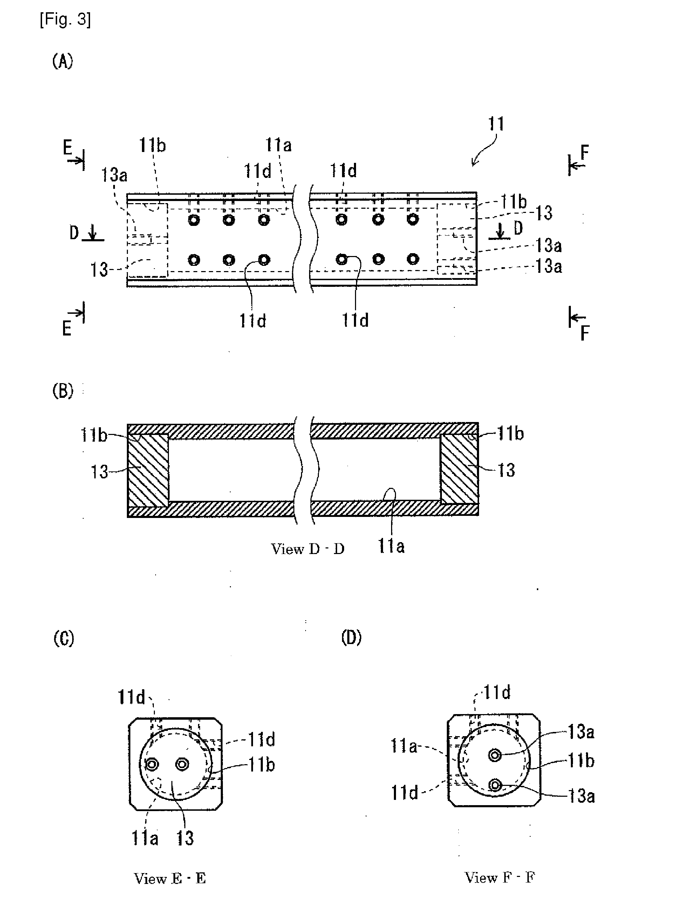

As shown in Fig. 3, the second square pipe 11 has a hollow 11a that has the same shape as the hollow 10a of the first square pipe 10. Both ends of the second square pipe 11 are formed as a portion 11b for a plug being inserted that has the same shape as that of the portion 10b for a plug being inserted of the first square pipe 10. The plug 13 is inserted into, and fixed by adhesion to, the portion 11b, to form an end face. A portion 11d for fixing a bolt for the fixing member is formed at the side of the second square pipe 11. A bolt 20 is bolted through the portion 11d to fix the second square pipe 11 to the first square pipe 10 by the fixing member 12. At both ends of the second square pipe 11, it is made shorter than the first square pipe 10 by a distance that is approximately equal to the width of the first square pipe 10, to constitute an edge of a cube by abutting both end faces to the sides of the first square pipes 10.

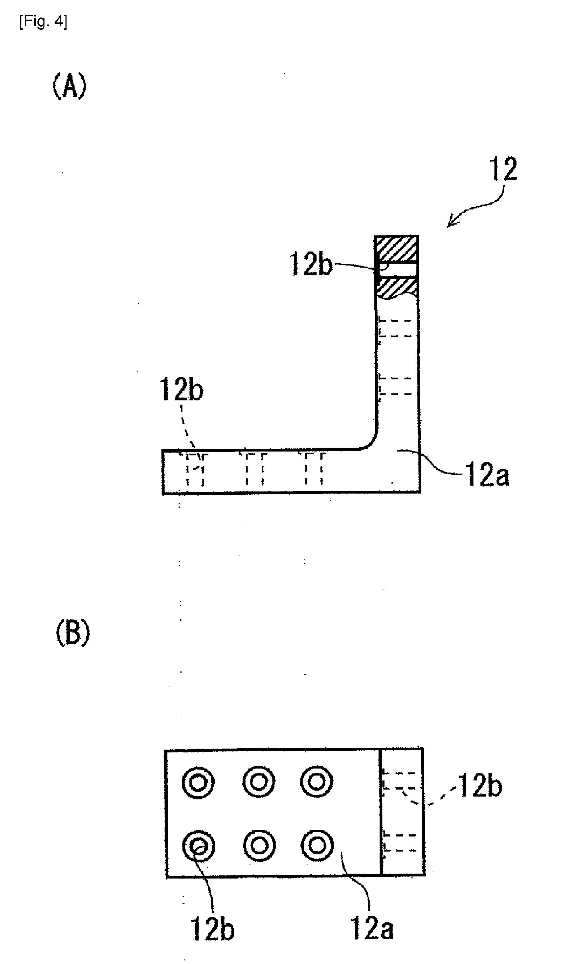

As shown in Fig. 4, the fixing member 12 has a main body 12a that is shaped like an "L." The fixing member 12 is made of the same ceramic material as that for the first square pipe 10. A fixing member may be constructed as a shape that is formed by two fixing members 12. By that fixing member two first square pipes 10 and one second square pipe 11 are fixed so that each square pipe is perpendicular to the other square pipes. Holes 12b for fixing the square pipe are formed in the fixing member 12 so that a bolt 20 is inserted through them. The holes 12b are positioned at locations that correspond to the locations of the portion 10d for fixing a bolt for the fixing member in the first square pipe 10 and the portion 11d for fixing a bolt for the fixing member in the second square pipe 11 when the first square pipes 10 and the first square pipes 10 or the second square pipes 11 are perpendicularly assembled.

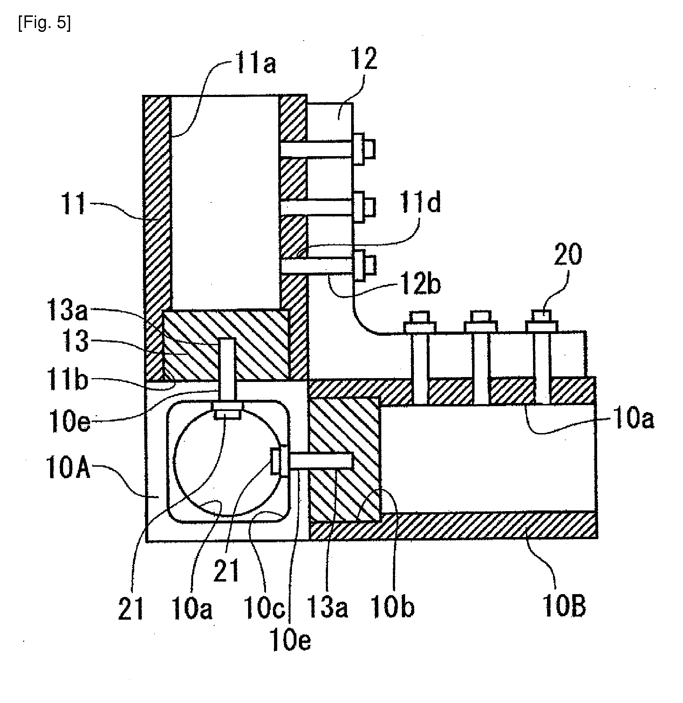

With reference to Fig. 5, the assembled structure of the cubic standard 1 is now described. Fig. 5 is a partially-perspective sectional view of the part K in Fig. 1. At the part K, the first square pipe 10A is placed in the direction vertical to the drawing. The first square pipe 10B is placed so that its longitudinal direction is horizontal in the drawing. The second square pipe 11 is placed so that its longitudinal direction is vertical in the drawing. The first square pipe 10B and the second square pipe 11 are assembled with the first square pipe 10A.

The first square pipe 10b and the second square pipe 11 are fixed by the bolts 20 after being placed by means of the fixing member 12 so that they are perpendicular to each other. By using the fixing member 12, the first square pipe 10B and the second square pipe 11 are securely fixed. Further, the rigidity of the cubic standard 1 increases. Since the adjoining square pipes are placed perpendicular to each other, assembling the square pipes is facilitated, and done with a high degree of accuracy. Thus, since assembling square pipes is facilitated and the number of steps for finishing the cubic standard is reduced, the costs for manufacturing are reduced.

The fixing member 12 may be fixed by adhesion, instead of by the bolts 20. In this case, the portions 10d, 11d for fixing a bolt for the fixing member or the hole 12b for fixing the square pipe need not be formed in the first square pipe 10, second square pipe 11, or fixing member 12, respectively.

Fixation by the bolt 20 and that by adhesion may be jointly used.

At the corner of the cubic standard 1, the side of the first square pipe 10A adheres to the end faces that are formed by the ends of the first square pipe 10B and the second square pipe 11 and the plugs 13. Further, the square pipes are fixed by the bolts 21 through the holes 10e for fixing the plug. Since the end face is formed by the plug 13, the areas for adhering the side of the first square pipe 10A to the end faces of the first square pipe 10B and the second square pipe 11 become large. Thus, since the structural strength and rigidity of the cubic standard 1 increase, a standard with a high degree of accuracy is obtained. Since the plug 13 has the bolted section 13a to be fixed by the bolt 21, the fixation is more secure and the structural strength and rigidity of the cubic standard 1 further increase.

The end faces that are formed by the ends of the first square pipe 10B and the second square pipe 11 and the plugs 13 need not adhere to the side of the first square pipe 10A. However, adhering increases the structural strength and rigidity of the cubic standard 1 so that a standard with a higher accuracy is obtained.

If the required rigidity is achieved, as, for example, for a small cubic standard 1, the plug 13 need not be used.

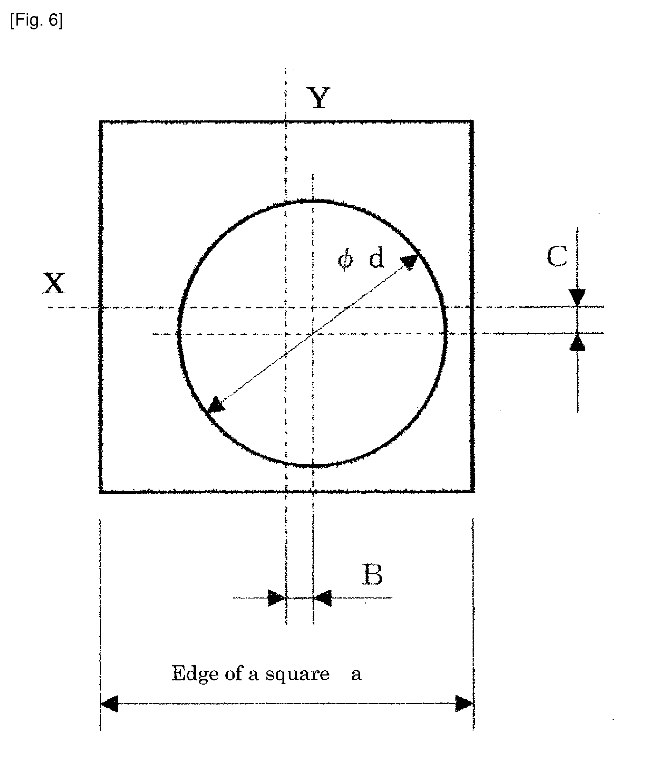

Now, with reference to Fig. 6, the effects on the rigidity of the cubic standard 1 caused by the eccentricity of the center of the hollow 10a to the center of the square cross section are described. If the stiffness of a beam of the square pipes 10, 11 increases, the rigidity of the cubic standard 1 increases. Thus the rigidity of the cubic standard 1 is discussed based on the deflection of a beam. The maximum deflection $\delta$ of a beam is calculated by the following equation.

Equation 1

$$\delta = K \cdot P \cdot f(L) / E / I$$

where K: a constant that is determined by the conditions to support the beam,
P: a load or self-weight,
f(L): a function determined by the length of the square pipe and the position of the load,
E: Young's modulus
I: a second moment of area

In Equation 1, since the parameter that is changed by the position of the hollow is only I, the rigidity of the cubic standard 1 is evaluated by the value of I. Assume that the second moment of area of a square having the edges of length a is $I_a$ and that the second moment of area of a circle having the diameter d is $I_d$. If the deflections of the center of the hollow to the center of the square cross section in the X- and Y-directions are B=0 (Y-direction) and C=0 (X-direction), then the second moments of area about the X-axis and the Y-axis $I_{X0}$ and $I_{Y0}$ are calculated by the following equation.

Equation 2

$$I_{X0} = I_{Y0} = I_a - I_d$$

If B=b and C=c, then $I_X$ (about the X-axis) and $I_Y$ (about the Y-axis) are calculated by the following equations. Please note that in these equations, the movements of the neutral axes caused by the deflections b, c are omitted, as they are considered to be small.

Equation 3

$$I_X = I_a - (I_d + c^2 \cdot \pi d^2 / 4)$$

## Equation 4

$$I_Y = I_a - (I_d + b^2 \cdot \pi d^2 / 4)$$

As shown in Equations 3 and 4, a deflection of the center of the circular hollow from the center of the square cross section leads to $I_X < I_{X0}$ or $I_Y < I_{Y0}$. Thus the smaller the deflection is, the higher the rigidity of the cubic standard 1 is.

If the deflection is large, the degree of the decrease in the second moment of area becomes large and thereby the decrease in the rigidity becomes large. Thus the degree of the decrease in the second moment of area about an axis in which the deflection is large is discussed. If c > b, the degree of the decrease in the second moment of area for $I_X$ is larger. The degree of the decrease in the second moment of area is calculated by the following equation, which is converted from Equation 3.

## Equation 5

$$I_X / I_{X0} = 1 - c^2 \cdot \pi d^2 / (4 \cdot I_{X0})$$

For example, if the degree of the decrease in the second moment of area is required to be 5% or less, the second term in the right-hand side in Equation 5 must be 0.05 or less. By normalizing the deflection to be the value c / a, the cubic standard 1 must be manufactured so that the value c / a complies with the following equation.

## Equation 6

$$c / a \leq (0.2 \, I_{X0} / \pi)^{1/2} / (a \cdot d)$$

In this embodiment alumina is used for the ceramic material that constitutes the cubic standard 1. However, the ceramic material is not limited to it. Silicon nitride, silicon carbide, or another ceramic material may be used for the ceramic material.

A Variation

As shown in Fig. 7, a pair of reinforcing pipes 30 may be provided, wherein their longitudinal axes are vertical. The reinforcing pipes 30 are square pipes that are made of the same ceramic material as that for the first square pipe 10. In this embodiment, one of the reinforcing pipes 30 is disposed just on a point S that is located at the center of a horizontal edge. The other is located at the center in the vertical plane that faces to the one of the reinforcing pipes 30. Both pipes are fixed to the first square pipes 10 by means of the fixing members 12. That is, the reinforcing pipes 30 are located at the center of a pair of the second square pipes 11 , which constitute vertical edges of the cube and at the center of the other pair of the second square pipes 11, wherein the longitudinal axes of the reinforcing pipes 30 are vertical. The pipes 30 are fixed by fixing members 12 to the first square pipes 10 that constitute the horizontal edges of the cube. Thus the rigidity of the cubic standard 1 is effectively increased. Especially, for the large cubic standard 1, for example, having an edge 1,000 mm long, the reinforcing pipes are preferably used to increase its rigidity.

Advantageous Effects of the Embodiments

1. The cubic standard 1 of the present invention is constructed by assembling the first and second pipes 10, 11, which are made of a ceramic material that is light and has a high Young's modulus. Thus, though the first and second pipes 10, 11 are hollow, the cubic standard 1 has a high rigidity that is adequate for use. Therefore, the weight of the cubic standard 1 is significantly reduced compared to a conventional solid cubic standard.

The face of a square pipe that abuts another square pipe adheres to the other square pipe. Further, the one square pipe and the other square pipe are perpendicularly positioned and fixed by the fixing member 12. Thus they are securely fixed and thereby the rigidity of the cubic standard 1 increases. Since the adjoining pipes are placed perpendicularly to each other, assembling the square pipes is facilitated, and done with a high degree of accuracy. Therefore, since the assembling is facilitated and the number of steps for finishing the cubic standard 1 is reduced, the costs for manufacturing the cubic standard 1 is reduced.

2. Since the end faces that are used for adhering the square pipes are formed by the plugs 13, the adhering areas increase. Thus the structural strength and the rigidity of the cubic standard 1 increases and a cubic standard with a high degree of accuracy is obtained. Further, since the plugs 13 have the bolted section 13a to be fixed by a bolt, the first and second square pipes 10, 11 are more securely fixed. Thereby the structural strength and the rigidity of the cubic standard 1 further increase.

3. If the hollows of the first square pipe 10 and the second square pipe 11 are circular, the second moment of area increases compared to the square pipes of which the hollows are square and that have the same cross-sectional areas as these pipes. Thus the rigidity of the cubic standard 1 increases.

Below the major notations used in the detailed description and drawings are listed.

1. a cubic standard
10. a first square pipe
10a. a hollow
10b. a portion for a plug being inserted
10c. a portion for fixation
10d. a portion for fixing a bolt for the fixing member
10e. a hole for fixing the plug
11. a second square pipe
11a. a hollow
11b. a portion for a plug being inserted
11d. a portion for fixing a bolt for the fixing member
12. a fixing member
12a. a main body
12b. a hole for fixing the square pipe
13. a plug
13a. a bolted section
20, 21. a bolt
30. a reinforcing pipe

**Claims**

1. A cubic standard (1) for measuring the degree of accuracy of the three-dimensional geometry of various kinds of machine tools and measuring instruments that is constructed by assembling a plurality of ceramic square pipes (10,11), wherein adjoining square pipes are configured to form a corner by an end face in a longitudinal direction of one of the adjoining square pipes abutting a side in a longitudinal direction of the other of the adjoining square pipes, and wherein the one and the other of the adjoining square pipes are fixed by a fixing member (12) so that the one square pipe is perpendicular to the other square pipe.

2. The cubic standard of claim 1, wherein the end face of the one of the adjoining square pipes that abuts the side of the other of the adjoining square pipes adheres to the side of the other of the adjoining square pipes.

3. The cubic standard of claim 2, wherein a block-like plug is provided to an end in the longitudinal direction of the one of the adjoining square pipes that abuts the other one of the adjoining square pipes, so as to form the end face by being inserted into and adhere to the one of the adjoining square pipes, and wherein the end face abuts the side of the other one to adhere to the other one.

4. The cubic standard of claim 3, wherein the plug comprises a bolted section to be bolted to the side where the plug abuts, and wherein the plug is configured to be bolted by a bolt through a hole formed in the side where the plug abuts.

5. The cubic standard of any of claims 1 to 4, wherein the square pipes are made of an alumina ceramic material.

6. The cubic standard of any of claims 1 to 4, wherein the hollow of the square pipes has a circular cross section.

7. The cubic standard of any of claims 1 to 4, wherein two reinforcing square pipes made of ceramics are disposed at a center between one pair of square pipes and at a center between the other pair of square pipes that are positioned on vertical adjacent edges of a cube that is shaped as the cubic standard, wherein longitudinal axes of the reinforcing square pipes are vertical, and wherein the reinforcing square pipes are fixed by fixing members to the square pipes that are configured to be horizontal edges of the cube.

**Patentansprüche**

1. Standardkubus (1) zum Messen des Genauigkeitsgrades der räumlichen Geometrie verschiedener Arten von Werkzeugmaschinen und Messinstrumenten, der durch Montieren einer Mehrzahl von Keramik-Vierkantrohren (10, 11) erstellt wird, wobei aneinandergrenzende Vierkantrohre dazu ausgebildet sind, durch eine Endfläche in einer Längsrichtung eines der aneinandergrenzenden Vierkantrohre, die an einer Seite in einer Längsrichtung des anderen der aneinandergrenzenden Vierkantrohre anliegt, eine Ecke zu bilden, und wobei das eine und das andere der aneinandergrenzenden Vierkantrohre durch ein Befestigungselement (12) so befestigt sind, dass sich das eine Vierkantrohr senkrecht zu dem anderen Vierkantrohr erstreckt.

2. Standardkubus nach Anspruch 1, wobei die Endfläche des einen der aneinandergrenzenden Vierkantrohre, die an der Seite des anderen der aneinandergrenzenden Vierkantrohre anliegt, an der Seite des anderen der aneinandergrenzenden Vierkantrohre haftet.

3. Standardkubus nach Anspruch 2, wobei ein blockartiger Zapfen an einem Ende in der Längsrichtung des einen der aneinandergrenzenden Vierkantrohre, das an dem anderen der aneinandergrenzenden Vierkantrohre anliegt, so bereitgestellt wird, dass er die Endfläche bildet, indem er in das eine der aneinandergrenzenden Vierkantrohre eingeführt wird und an diesem haftet, und wobei die Endfläche so an der Seite des anderen anliegt, dass sie an dem anderen haftet.

**4.** Standardkubus nach Anspruch 3, wobei der Zapfen einen mit einem Bolzen zu befestigenden Abschnitt zum Verbolzen an der Seite aufweist, an der der Zapfen anliegt, und wobei der Zapfen zum Befestigen durch einen Bolzen durch eine Öffnung ausgebildet ist, die in der Seite gebildet ist, an der der Zapfen anliegt.

**5.** Standardkubus nach einem beliebigen der Ansprüche 1 bis 4, wobei die Vierkantrohre aus einem Aluminiumoxid-Keramikmaterial hergestellt sind.

**6.** Standardkubus nach einem beliebigen der Ansprüche 1 bis 4, wobei der Hohlraum der Vierkantrohre einen Kreisquerschnitt aufweist.

**7.** Standardkubus nach einem beliebigen der Ansprüche 1 bis 4, wobei zwei Verstärkungs-Vierkantrohre aus Keramik in einer Mitte zwischen einem Paar Vierkantrohre und in einer Mitte zwischen dem anderen Paar Vierkantrohre angeordnet sind, die an vertikalen aneinandergrenzenden Kanten eines Kubus positioniert sind, der als Standardkubus ausgebildet ist, wobei Längsachsen der Verstärkungs-Vierkantrohre vertikal verlaufen und wobei die Verstärkungs-Vierkantrohre durch Befestigungselemente an den Vierkantrohren befestigt sind, die als horizontale Kanten des Kubus ausgebildet sind.

**Revendications**

**1.** Cube étalon (1) pour mesurer le degré de précision de la géométrie tridimensionnelle de divers types de machines-outils et d'instruments de mesure qui est construit en assemblant une pluralité de tuyaux carrés (10, 11) en céramique,
dans lequel des tuyaux carrés adjacents sont configurés pour former un angle au niveau d'une face d'extrémité dans un sens longitudinal d'un des tuyaux carrés adjacents butant sur un côté dans un sens longitudinal de l'autre des tuyaux carrés adjacents, et
dans lequel l'un et l'autre des tuyaux carrés adjacents sont fixés par un élément de fixation (12), de façon à ce qu'un tuyau carré soit perpendiculaire à l'autre tuyau carré.

**2.** Cube étalon selon la revendication 1, dans lequel la face d'extrémité de l'un des tuyaux carrés adjacents qui bute sur le côté de l'autre des tuyaux carrés adjacents adhère au côté de l'autre des tuyaux carrés adjacents.

**3.** Cube étalon selon la revendication 2, dans lequel un bouchon de type bloc est prévu à une extrémité dans le sens longitudinal de l'un des tuyaux carrés adjacents qui bute contre l'autre des tuyaux carrés adjacents, de façon à former la face d'extrémité en étant inséré dans et fait adhérer à l'un des tuyaux carrés adjacents, et dans lequel la face d'extrémité bute contre le côté de l'autre pour adhérer à l'autre.

**4.** Cube étalon selon la revendication 3, dans lequel le bouchon comprend une section boulonnée destinée à être boulonnée sur le côté où le bouchon bute, et dans lequel le bouchon est configuré pour être boulonné par un boulon à travers un trou formé dans le côté où le bouchon bute.

**5.** Cube étalon selon l'une quelconque des revendications 1 à 4, dans lequel les tuyaux carrés sont constitués d'un matériau de céramique d'alumine.

**6.** Cube étalon selon l'une quelconque des revendications 1 à 4, dans lequel le creux des tuyaux carrés a une section transversale circulaire.

**7.** Cube étalon selon l'une quelconque des revendications 1 à 4, dans lequel deux tuyaux carrés de renfort constitués de céramique sont disposés au niveau d'un centre entre une paire de tuyaux carrés et au niveau d'un centre entre l'autre paire de tuyaux carrés qui sont positionnées sur des bords verticaux adjacents d'un cube qui est formé comme le cube étalon, dans lequel des axes longitudinaux des tuyaux carrés de renfort sont verticaux, et dans lequel les tuyaux carrés de renfort sont fixés par des éléments de fixation aux tuyaux carrés qui sont configurés pour être des bords horizontaux du cube.

[Fig. 1]

[Fig. 2]

(A)

(B)

View A - A

(C)

View B - B

(D)

View C - C

[Fig. 3]

(A)

(B)

View D - D      11a

(C)                           (D)

View E - E                    View F - F

[Fig. 4]

(A)

12

12b

12b

12a

(B)

12b

12b          12a

[Fig. 5]

[Fig. 6]

[Fig. 7]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10159442 A1
- JP S6295848 B
- JP 2011044082 A